(19) Europäisches Patentamt
European Patent Office
Office européen des brevets

(11) Veröffentlichungsnummer: **0 583 677 A1**

(12) **EUROPÄISCHE PATENTANMELDUNG**

(21) Anmeldenummer: **93112405.1**

(51) Int. Cl.5: **G02F 1/35**, B05D 1/20

(22) Anmeldetag: **03.08.93**

(30) Priorität: **19.08.92 DE 4227378**

(43) Veröffentlichungstag der Anmeldung:
**23.02.94 Patentblatt 94/08**

(84) Benannte Vertragsstaaten:
**BE CH DE DK FR GB IT LI NL**

(71) Anmelder: **HOECHST AKTIENGESELLSCHAFT**
**Brüningstrasse 50**
**D-65929 Frankfurt am Main(DE)**

(72) Erfinder: **Falk, Uwe, Dr.**
**Breitenbachstrasse 67**
**D-65187 Wiesbaden(DE)**
Erfinder: **Hickel, Werner, Dr.**
**Pfalzgrafenstrasse 65**
**D-67061 Ludwigshafen(DE)**
Erfinder: **Lupo, Donald, Dr.**
**Am Holderbusch 28**
**D-65817 Eppstein/Ts.(DE)**
Erfinder: **Scheunemann, Ude, Dr.**
**Feldbergstrasse 12**
**D-65835 Liederbach(DE)**

(54) **Schichtelement und seine Verwendung.**

(57) Ein Schichtelement besteht aus mehreren monomolekularen, regelmäßig und alternierend angeordneten Schichten ABABAB... auf einem Schichtträger, wobei A eine Schicht eines Farbstoffs ist, dessen Chromophor eine Donor-Akzeptor-Struktur aufweist und B eine Schicht aus Cellulose ist, deren Hydroxylgruppen mindestens teilweise durch den Rest

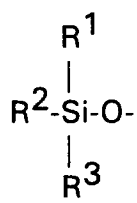

substituiert sind, wobei $R^1$ und $R^2$ unabhängig voneinander einen Alkylrest mit 1 bis 4 C-Atomen und $R^3$ einen Alkylrest mit 1 bis 18 C-Atomen oder den Phenyl-, Toluyl- oder Benzylrest bedeutet. Das Schichtelement eignet sich, für Zwecke der nichtlinearen Optik.

EP 0 583 677 A1

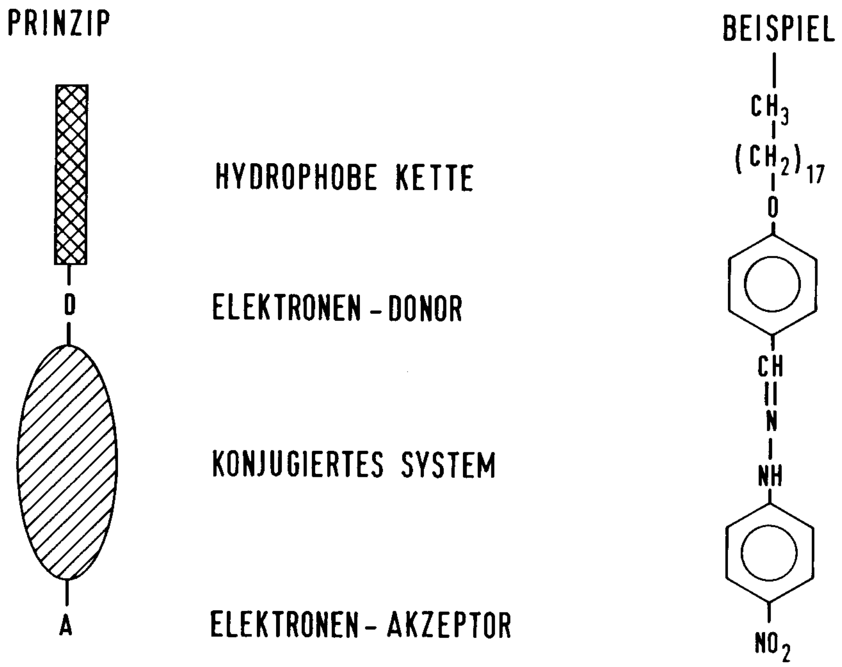
PRINZIP
HYDROPHOBE KETTE
D
ELEKTRONEN - DONOR
KONJUGIERTES SYSTEM
A
ELEKTRONEN - AKZEPTOR
BEISPIEL

Fig. 1

Die vorliegende Erfindung betrifft ein Schichtelement, bei dem auf einem Schichtträger mehrere monomolekulare Schichten, regelmäßig und alternierend angeordnet sind. Ein Teil der Schichten enthält einen Chromophor mit hoher molekularer Hyperpolarisierbarkeit 2. Ordnung, so daß das Schichtelement für NLO-Prozesse geeignet ist.

Für die technische Anwendung von nichtlinear optischen (NLO) Prozessen 2.ter Ordnung (z. B. Datenspeicherung: Frequenzverdopplung (SHG) von Halbleiterlasern, Telekommunikation: optische Frequenzmischung, parametrische Verstärkung) werden Materialien mit großen NLO Suszeptibiltäten zweiter Ordnung ($X^{(2)}$) benötigt.
Organische Moleküle mit hohen molekularen Hyperpolarisierbarkeiten 2. Ordnung sind Chromophore mit Donor-Akzeptor Struktur. Zur Nutzung der molekularen Eigenschaften in einem Material ist die Orientierung der Chromophore in einer nichtzentrosymmetrischen Anordnung notwendig.

Die Möglichkeit Chromophore zu orientieren, bietet die Langmuir-Blodgett (LB) Technik. Bei dem LB Verfahren ordnen sich die Chromophore an der Wasser Luft Grenzfläche und können durch Eintauchen eines Substrats durch die Wasser Luft Grenzfläche auf dieses übertragen werden. In der Arbeit von Bubeck et. al. (Adv. Mater.3 (1991) 1, 54 bis 58) wird über die SHG und Chromophorenorientierung in LB-Farbstoffmonoschichten berichtet. Sie bestätigt die gute Orientierung der Chromophore in der LB-Monoschicht bei guten SHG-Aktivitäten.

Die Herstellung nichtzentrosymmetrischer Multischichten gelingt prinzipiell durch alternierendes Auftragen von aktiven (Chromophor-) und inaktiven (chromophorfreier Monomer- oder Polymer-) Schichten. Voraussetzung für hohe $X^{(2)}$-Werte der Multischichten ist unter anderem der Erhalt der Chromophororientierung bei der alternierenden Beschichtung.

Wie eigene Experimente zeigten, ist die Chromophororientierung im alternierenden Multischichtsystem von der inaktiven Schicht abhängig. Es bestand daher die Aufgabe, ein Schichtelement anzugeben, dessen inaktive Schicht (von Farbstoff freie Schicht) aus einem Material besteht, das die Orientierung des Chromophors in der alternierenden Multischicht nicht oder nur in einem unbedeutetem Ausmaß beeinflußt. Diese Eigenschaft soll möglichst unabhängig von der aktiven Schicht (den Chromophor enthaltend) sein. Insbesondere sollte die inaktive Schicht des Schichtsystems eine geringe Schichtdicke, eine gute optische Qualität (geringe Dämpfung) und gute thermische Stabilität aufweisen.

Es wurde nun ein Schichtelement gefunden, das aus mehreren monomolekularen, regelmäßig und alternierend angeordneten Schichten auf einem Schichtträger besteht und das dadurch gekennzeichnet ist, daß jeweils eine Schicht eines Farbstoffs, dessen Chromophor eine Donor-Akzeptor-Struktur aufweist, mit einer Schicht abwechselt, die aus Cellulose besteht, deren Hydroxylgruppen mindestens teilweise durch den Rest $R^1R^2R^3SiO$-substituiert sind, wobei $R^1$ und $R^2$ unabhängig voneinander einen Alkylrest mit 1 bis 4 C-Atomen und $R^3$ einen Alkylrest mit 1 bis 18 C-Atomen oder den Phenyl-, Tolyl- oder Benzylrest bedeutet. Bevorzugt ist Trimethylsilylcellulose (TMSC).

Mit der Langmuir-Blodgett-Technik können geordnete monomolekulare Filme an der Wasser-Luft-Grenzfläche hergestellt werden. Hierzu werden wasserunlösliche amphiphile Moleküle (Monomere oder Polymere) aus einer Lösung mit einem leicht flüchtigen Lösungsmittel auf der Wasseroberfläche gespreitet. Durch anschließende Kompression mit einer Barriere entsteht ein zweidimensionaler geordneter Film an der Wasser-Luft Grenzfläche. Zur Übertragung des monomolekularen Films auf ein festes Substrat wird dieses senkrecht durch die Wasser-Luft-Grenzfläche getaucht. Durch mehrmaliges Tauchen können Multischichten auf das Substrat übertragen werden.

Übliche Amphiphile sind im allgemeinen nicht NLO-aktiv. Zur Herstellung von NLO-aktiven Monoschichten nach den Langmuir-Blodgett-Verfahren müssen daher Moleküle eingesetzt werden, die amphiphil sind und zusätzlich einen Chromophor mit Donor-Akzeptor-Struktur aufweisen. Das Prinzip des Molekülaufbaus für ein funktionalisiertes Monomer bzw. Polymer zeigt Fig. 1. Aufgrund des amphiphilen Charakters des Gesamtmoleküls orientieren sich die Chromophore beim Filmbildungsprozeß an der Wasser-Luft Grenzfläche senkrecht zur Wasseroberfläche und die Moleküle können unter Erhalt der Ordnung auf ein festes Substrat übertragen werden. Die Übertragung von Multischichten auf ein Substrat - wie oben beschrieben - führt jedoch zu einem zentrosymmetrischen Schichtsystem, weil üblicherweise der hydrophile Teil der einen Schicht dem hydrophilen Teil der anderen Schicht benachbart ist und quasi zwischen zwei Schichten eine Symmetrieebene verläuft. Ein solches Schichtsystem zeigt keine NLO-Effekte zweiter Ordnung.

Eine Möglichkeit die Zentrosymmetrie im Multischichtsystem zu verhindern, ist die Erzeugung alternierender Schichten. Hierbei wird abwechselnd eine NLO-aktive und eine NLO-inaktive Schicht auf das Substrat übertragen.

Für die Herstellung alternierender Schichten wird ein sogenannter AB-Trog benötigt. Ein Beispiel für ein solches System zeigt Fig. 2. Es besteht aus einem Trog (1), der durch eine feststehende Barriere (2) geteilt ist. Die beiden Troghälften (A, B) sind mit einer flüssigen Phase gefüllt (nicht gezeichnet), die unterhalb der

Barriere (2) frei beweglich ist. In jeder Troghälfte (A, B) kann unabhängig von der anderen ein Film auf der flüssigen Phase erzeugt werden. Für eine alternierende Beschichtung wird das Substrat (10) an der Stelle (4) mit dem Filmlift (3) durch die Schicht in der Hälfte A eingetaucht, unter der Barriere (2) in das Teilbecken B geschoben und an der Stelle (5) durch die Schicht (nicht gezeichnet) ausgetaucht. Nahe der Barriere (2), insbesondere zwischen den Stellen (4) und (5) ist das Tauchbecken etwas vertieft (nicht gezeichnet). Um den Druck in den einzelnen Schichten einzustellen, werden die beweglichen Barrieren (6) und (7) an der Flüssigkeitsoberfläche in Pfeilrichtung bewegt. Zur Druckmessung in den Bereichen A und B dienen die Wilhelmi-Platten (8) und (9). Ein solcher Trog ist z. B. aus EP-A-0 183 426 bekannt.

Für die Herstellung alternierender Multischichten wurde als aktiver Schichtpartner beispielhaft je ein Monomer und ein Polymer der folgenden Struktur ausgewählt:

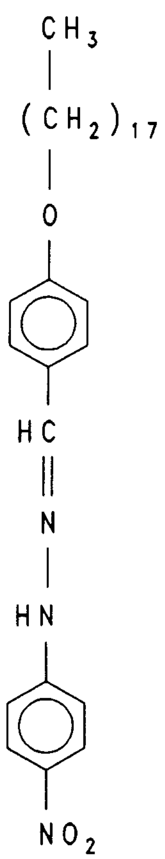

I

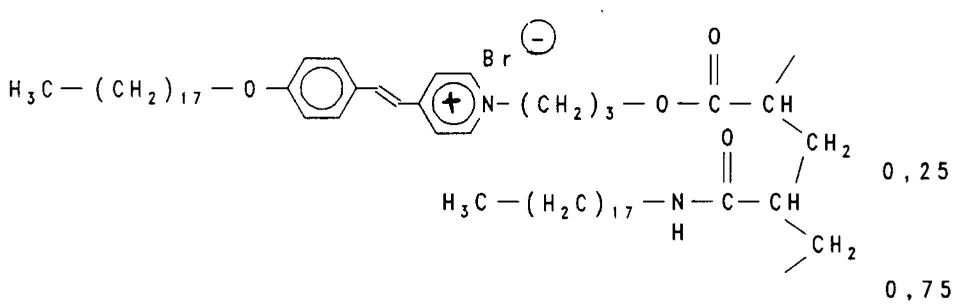

II

Als inaktive Partner im alternierenden Schichtsystem wurden die nachfolgend aufgeführten Monomere und Polymere verwendet:
Acrylsäureoctadecylamid:

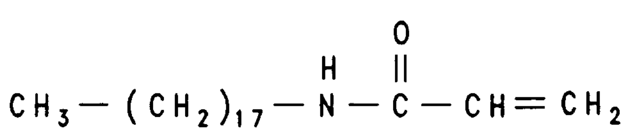

ω-Tricosensäure:

$$H_2C=CH-(CH_2)_{20}-COOH$$

PO 86:

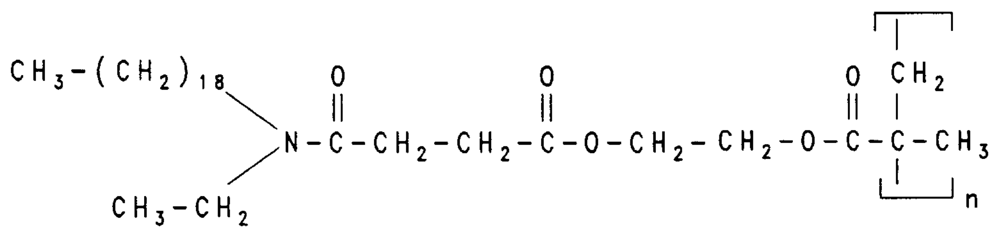

Polyisobutylmethacrylat:

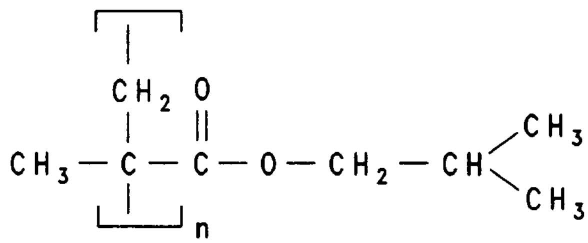

TMSC:

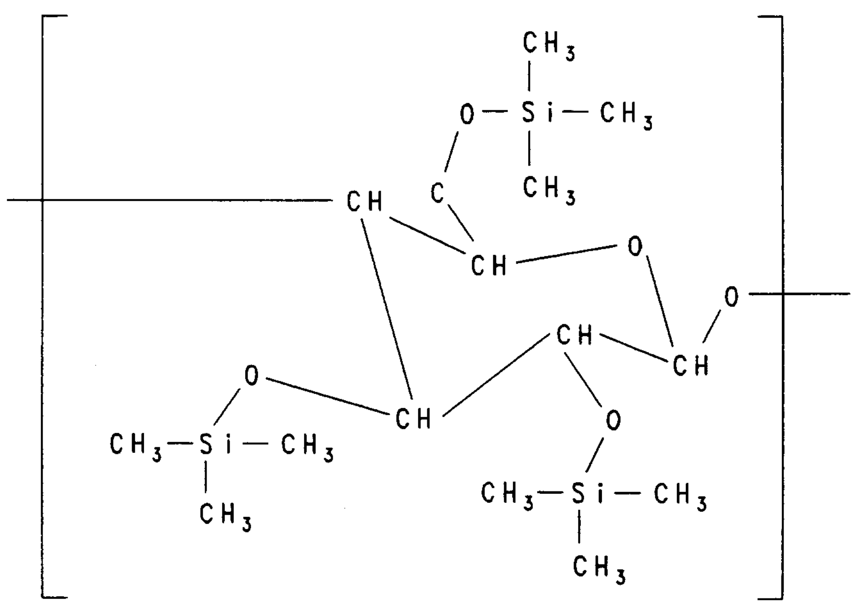

Die amphiphilen Monomere Acrysäureoctadecylamid (AODA) und $\omega$-Tricosensäure ($\omega$-tric) bilden festanaloge Filme mit teilkristallinen Alkylketten. Das amphiphile Polymer PO86 bildet einen fluidanalogen Film mit amorph gepackten Alkylketten. Polyisobutylmethacrylat (PiBMA) und Trimethylsilylcellulose (TMSC) sind im klassischen Sinne nicht amphiphil, bilden aber trotzdem amorphe, monomolekular dicke Filme an der Wasseroberfläche die sich gut auf feste Substrate übertragen lassen. Die Verbindungen AODA, $\omega$-tric, P086 und PiBMA dienen als Vergleich.

Die inaktive Schicht darf die Chromophorenorientierung nicht beeinflussen, aber muß noch weitere Anforderungen erfüllen. Hierzu zählen die thermische Stabilität, eine geringe Schichtdicke und eine gute optische Qualität. Aufgrund der höheren Stabilität sind die Polymere den Monomeren überlegen. TMSC (Trimethylsilylcellulose) erweist sich als Substanz, die alle diese Bedingungen erfüllt. Da PiBMA- und

TMSC-Filme wegen der fehlenden langen hydrophoben Alkylketten sehr dünn sind, besitzen sie einen Vorteil gegenüber PO86. Für alle aufgeführten Polymere, insbesondere TMSC, ist eine gute optische Qualität, d.h. geringe optische Dämpfung in wellenleitenden Schichten, experimentell beobachtet worden.

Die Wechselwirkung von Licht mit Materie wird durch die Polarisation P beschrieben. Bei geringen Lichtintensitäten ist die Polarisation proportional zur elektrischen Feldstärke E.

$$P = \epsilon_0 \chi^{(1)} E$$

Bei hohen Lichtintensitäten, d.h. großen Feldstärken, gilt der lineare Zusammenhang zwischen P und E nicht mehr. Die Polarisation der Materie wird durch eine Potenzreihe in E beschrieben.

$$P = \epsilon_0 (\chi^{(1)} E + \chi^{(2)} E^2 + \chi^{(3)} E^3 \ldots)$$

Die Terme höherer Ordnung bewirken eine Vielzahl nichtlinear optischer Effekte. Eine ausführliche Beschreibung findet man in dem Buch "The Principles of Nonlinear Optics" von Y.R. Shen (John Wiley, 1984).

Die NLO-Prozesse zweiter Ordnung werden durch den Term $\chi^{(2)} E^2$ beschrieben. Die wichtigsten Phänomene sind der Pockels-Effekt, die Frequenzverdopplung, die Frequenzmischung und die parametrische Verstärkung.

Silylderivate der Cellulose sowie Verfahren zur Herstellung von Fasern und Folien aus regenerierter Cellulose sind sowohl aus der Publikation von G. Greber und O. Paschinger in "das Papier", 35. Jahrgang, Heft 12 (1981) Seiten 547 bis 554 als auch aus der DE-A 31 04 529 bekannt. Hierbei wird Cellulose mit Trimethylchlorsilan silyliert und deren Lösungen in organischen Lösungsmitteln in geformte Erzeugnisse überführt.

Die Herstellung von silylierter Cellulose ist ferner bekannt aus J. Polym. Sc. Part A-1, (1969), 7 (7), 1947 und Makromol. Chemie 1968, 120, 87 bis 95.

Zur Herstellung einer Monoschicht aus silylierter Cellulose wird diese zweckmäßigerweise in leichtflüchtigen organischen Lösungsmitteln, wie Methylenchlorid, Chloroform, Benzol, Hexan oder Ethylacetat in Konzentrationen von 0,01 bis 1 Gew.-% gelöst, die Lösung auf der Wasseroberfläche des Langmuir-Troges gespreitet, das Lösungsmittel aus der auf die Wasseroberfläche aufgebrachten Lösung der silylierten Cellulose durch Verdunsten entfernt und die Monoschicht vor der Übertragung auf festen Schichtträger in üblicher Weise vorkomprimiert.

## Beispiele

Zur Charakterisierung der alternierenden LB-Schichten hinsichtlich ihrer NLO-Eigenschaften zweiter Ordnung wird die Frequenzverdopplung mit einer Maker-Fringe Apparatur gemessen (P. D. Maker et. al., Phys. Rev. Lett. 8, 21 (1962)). Dabei trifft ein p-polarisierter Nd-YAG Laserstrahl auf die zu untersuchende Schicht. Gemessen wird die p-polarisierte frequenzverdoppelte Lichtintensität in Abhängigkeit des Einfallswinkels des Laserstrahls auf die LB-Monolage. Ein Beispiel für eine solche Meßkurve zeigt Fig. 3. Die Ordinate zeigt die Intensität in willkürlichen Einheiten. Aus der Kurve wird die maximale SHG-Intensität bestimmt. Ist die Orientierung der Chromophore in der alternierenden Multischicht unabhängig von der Schichtdicke, so steigt die SHG-Intensität quadratisch mit der Anzahl der Farbstofflagen. Die Anpassung einer theoretischen Kurve nach J. E. Sipe, J. Opt. Am., B. 4, 4 (1987) 481 an die Meßwerte ermöglicht eine Bestimmung von $\chi^{(2)}$. Ist die Meßkurve symmetrisch bezogen auf senkrechten Lasereinfall (0° in Fig. 3), sind die Chromophore in der Farbstoffschicht um den mittleren Tiltwinkel $\alpha$ bezogen auf die Substratebene geneigt; in der Substratebene ist die Verteilung isotrop. Figur 4 zeigt die Anordnung/Orientierung des Chromophors in der LB-Schicht. Hierbei bedeutet A Akzeptor und Donator. Die Substratebene ist die Ebene senkrecht zu Z und beinhaltet die Achse X. Bezogen auf diese Ebene gibt es keine Vorzugsorientierung der Chromophore, d.h. die Winkel sigma sind in der Substrat-Ebene homogen verteilt (isotrop). Eine gute Orientierung beinhaltet demnach bei einer isotropen Verteilung in der Substratebene einen kleinen Winkel $\alpha$ zwischen Chromophor und der Substratsenkrechten, d.h. die Chromophoren liegen auf einem Kegel mit der Öffnung $2^*\alpha$, wobei die Spitze des Kegels senkrecht auf der Substratebene liegt.

Beispiel 1: (SHG an Farbstoffmonoschichten, Vergleichsbeispiel)

Zuerst wurde die SHG-Intensität der Farbstoffmonolagen mit der Maker Fringe Apparatur bestimmt.

Hierzu wurden mit einem LB-Trog der Fa. Lauda je vier hydrophile Glassubstrate mit Farbstoffmonoschichten aus I und II beschichtet. Die Beschichtungsbedingungen wurden wie folgt gewählt: für I: Wassertemperatur: 20°, Filmschub: 25 mN/m, Beschichtungsgeschwindigkeit: 30mm/min, für II: Wassertemperatur: 20°, Filmschub: 15 mN/m, Beschichtungsgeschwindigkeit: 40 mm/min.

Die so hergestellten Proben wurden mit der Maker Fringe Apparatur hinsichtlich der SHG-Eigenschaften untersucht. Alle Proben der gleichen Substanz zeigten ungefähr gleich große SHG-Intensitäten. Die SHG Intensitäten der Farbstoffmonoschichten aus I waren großer als die von II, da einmal die Chromophordichte in der Monoschicht aus dem Polymer II geringer ist als beim Monomer I und ferner die Substanzen I und II unterschiedliche Chromophore enthalten.

Die Abhängigkeit der SHG-Intensität vom Einfallswinkel war bei allen Proben aus I und II gleich. Die Meßkurven sind symmetrisch bezogen auf 0° Einfallswinkel. Das bestätigt die oben diskutierte Orientierung der Chromophore in der Farbstoffmonoschicht.

Die Auswertung der Meßkurven ergab die folgenden $\chi^{(2)}$-Werte für die Monoschichten: $\chi^{(2)}$(I) = 50 pm/V; $\chi^{(2)}$(II) = 15 pm/V.

Beispiel 2: (SHG an alternierenden Multischichten mit I)

Für die SHG-Messungen an Multischichten aus I und den oben aufgeführten inaktiven Partnern wurden am AB-Trog Proben mit jeweils 10, 20, 30 und 50 Schichtzyklen auf hydrophobem Glas hergestellt. Die Schichten aus I wurden unter den gleichen Bedingungen wie die Monoschichten (vgl. Beispiel 1) präpariert und jeweils beim Austauchen übertragen. Die gleichen Übertragungsbedingungen wurden für ω-tric und AODA gewählt. Die Polymere wurden bei geringeren Schüben (PO86: 15 mN/m, TMSC, PiBMA: 10 mN/m) und mit höheren Geschwindigkeiten (bis 100 mm/min) übertragen.

Mit allen inaktiven Partnern konnten homogene alternierende Multischichten hergestellt werden. Wie Fig. 5 zeigt, steigen die SHG-Intensitäten (Ordinate: Wurzel aus Intensität) der alternierenden Multischichtsysteme I/TMSC, I/AODA und I/PO86 quadratisch mit der Schichtdicke an. Die winkelabhängigen SHG-Intensitäten sind wie bei den Monoschichten symmetrisch bezogen auf senkrechten Lasereinfall. Aus den Meßkurven wurden die folgenden $\chi^{(2)}$-Werte für die verschiedenen Schichtsysteme bestimmt: $\chi^{(2)}$(I/PO86) = 8 pm/V, $\chi^{(2)}$(I/AODA) = 14 pm/V, $\chi^{(2)}$(I/PO86) = 20 pm/V. Die Übereinstimmung von $\chi^{(2)}$ für unterschiedlich dicke Proben des gleichen alternierenden Schichtsystems ist sehr gut.

Wie die Messungen an den Multischichten aus I/ω-tric und I/PiBMA zeigten, bleibt die Orientierung der Farbstoffschichten in diesen Schichtsystemen nicht erhalten. Die winkelabhängigen Intensitäten waren nicht mehr symmetrisch, was auf eine zusätzliche Orientierung der Chromophore parallel zum Substrat hindeutet. Die SHG-Intensitäten stiegen nicht quadratisch mit der Schichtdicke an. Insgesamt waren die Ergebnisse wenig reproduzierbar. Mögliche Ursachen hierfür sind die Wechselwirkung der ω-tric Säuregruppe mit dem Phenylhydrazon, bzw. die Durchmischung von I/PiBMA Schichten aufgrund des flüssiganalogen Charakters der PiBMA Schicht. Dies würde auch die geringe SHG-Aktivität der I/PO86 Schichten erklären.

Die durchgeführten Untersuchungen zeigen, daß die SHG Aktivität und somit die Orientierung der Chromophore in der alternierenden Multischicht vom inaktiven Schichtpartner abhängt. Bei allen Schichtsystemen ist die Orientierung der Chromophore in der alternierenden Multischicht im Vergleich zur Monoschicht geringer. Den geringsten Orientierungsverlust beobachtet man bei I/TMSC. Die Multischichten aus I/TMSC haben den größten $\chi^{(2)}$-Wert und die größten SHG-Intensitäten.

Beispiel 3: (SHG an alternierenden Multischichten aus II)

Für die Herstellung alternierender Schichten aus II wurde die Auswahl der inaktiven Schichten auf die Polymere PO86, PiBMA und TMSC begrenzt. Es wurden wie bereits beschrieben Proben mit 10, 20, 30 und 50 Schichtzyklen hergestellt. Die Beschichtungsbedingungen sind denen in Beispiel 1 und 2 analog.

Bei allen drei Schichtsystemen steigt die Intensität quadratisch mit der Schichtdicke an. Der Anstieg bei II/PO86 und II/PiBMA ist deutlich geringer als bei II/TMSC. Außerdem sind bei II/PO86 und II/PiBMA die Meßkurven deutlich asymmetrisch, was darauf hindeutet, daß in diesen Schichtsystemen die Chromophore zusätzlich in Beschichtungsrichtung orientiert sind. Die Bestimmung von $\chi^{(2)}$ aus den Meßkurven von II/TMSC ergab 9pm/V. Ein Verglich mit dem Wert der Monoschicht (vgl. Beispiel 1) unter Berücksichtigung der Schichtdicken von II (2.9 nm) und TMSC (0.9 nm) zeigt, daß die Orientierung der Chromophore in der Monoschicht und der alternierenden Multischicht nahezu gleich gut ist.

Beispiel 4: SHG-Intensität für Multischichten > 50 Zyklen

Es sollte getestet werden, ob der quadratische Anstieg der SHG-Intensität auch für dickere Multischichten erhalten bleibt. Hierfür wurden Multischichten bis 200 AB-Zyklen aus I/TMSC hergestellt. Wie Fig. 6 zeigt, steigt die SHG-Intensität auch bei den dickeren Proben (> 50 Schichtzyklen) mit dem Quadrat der Schichtdicke an. Die Winkelabhängigkeit der SHG-Intensität ist bei allen Proben gleich. Es ist somit anzunehmen, daß der Erhalt der Chromophororientierung im Multischichtsystem unabhängig von der Schichtdicke ist.

Beispiel 5: Lichtdämpfung von 200 Zyklen I/TMSC

Von besonderem Interesse war die Charakterisierung der wellenleitenden Schicht (200 AB Zyklen I/TMSC) hinsichtlich der optischen Dämpfung. Sie wurde dadurch bestimmt, daß mittels eines Prismas ein Lichtstrahl der Wellenlänge 633 nm eingekoppelt und die Oberfläche der wellenleitenden Schicht zur Detektierung des Streulichts mit einer Lichtleitfaser abgetastet wurde. Die ortsabhängig gemessenen Streulichtintensität einer TEO-Mode mit Auswertung ist in Fig. 7 dargestellt.
Aufgetragen wird hierbei die Intensität des gestreuten Lichtes (Ordinate in dB) in Abhängigkeit von der Länge des geführten Lichtes (Abszisse in cm). Die aus der Steigung (halblogarithmisch) bestimmbare Dämpfung beträgt dabei 3.5 dB/cm. Die Abnahme der Streulichtintensität mit der Entfernung vom einkoppelnden Prisma ist zu erkennen.
Für eine aktive Schicht bei der mehr als 80 % des elektrischen Feldes in der wellenleitenden Schicht geführt wird, ist dies ein sehr guter Wert. Er zeigt, daß es prinzipiell möglich ist, dicke aktive alternierende LB-Schichten mit guten wellenleitenden Eigenschaften herzustellen, wenn als aktive Schicht TMSC verwendet wird.

Beispiel 6: Thermische Stabilität von TMSC

Die thermische Stabilität von LB Schichten aus TMSC wurde nach der in (P. Tippmann-Krayer et. al., Adv. Mater. 3 (1991) 1, 46 bis 51) beschriebenen Methode der Interferenz-verstärkten Reflexion bestimmt. Hierzu wurde ein oxidierte Silizium-Wafer mit 30 Schichten TMSC beschichtet. Anschließend wurde die reflektierte Intensität polarisierten Laserlichts in Abhängigkeit von der Temperatur des Substrats bestimmt. Das Ergebnis ist in Fig. 8 dargestellt. Es ergibt sich, daß die TMSC-Schichten bis 250° C temperaturstabil sind.

## Patentansprüche

1. Schichtelement bestehend aus mehreren monomolekularen, regelmäßig und alternierend angeordneten Schichten ABABAB... auf einem Schichtträger, dadurch gekennzeichnet, daß A eine Schicht eines Farbstoffs ist, dessen Chromophor eine Donor-Akzeptor-Struktur aufweist und B eine Schicht aus Cellulose ist, deren Hydroxylgruppen mindestens teilweise durch den Rest

$$\begin{array}{c} R^1 \\ | \\ R^2\text{-Si-O-.} \\ | \\ R^3 \end{array}$$

substituiert wurden, wobei $R^1$ und $R^2$ unabhängig voneinander einen Alkylrest mit 1 bis 4 C-Atomen und $R^3$ einen Alkylrest mit 1 bis 18 C-Atomen oder den Phenyl-, Tolyl- oder Benzylrest bedeutet.

2. Schichtelements gemäß Anspruch 1, dadurch gekennzeichnet, daß der Polymerisationsgrad der substituierten Cellulose 100 bis 3000 beträgt.

3. Schichtelement gemäß Anspruch 1, dadurch gekennzeichnet, daß der Substitutionsgrad der substituierten Cellulose zwischen 1 und 3 liegt.

**4.** Schichtelement nach Anspruch 1, dadurch gekennzeichnet, daß der Farbstoff, dessen Chromophor eine Donor-Akzeptor-Struktur aufweist, eine amphiphile Verbindung darstellt.

**5.** Schichtelement gemäß Anspruch 1 oder 4, dadurch gekennzeichnet, daß der Farbstoff, dessen Chromophor eine Donor-Akzeptor-Struktur aufweist, eine polymere Verbindung darstellt.

**6.** Verwendung eines Schichtelements gemäß Anspruch 1 für lineare und nichtlineare Optik.

**7.** Verwendung gemäß Anspruch 6 für nichtlineare Optik zweiter Ordnung.

**8.** Verwendung gemäß Anspruch 7 für Frequenzverdopplung.

**9.** Verwendung gemäß Anspruch 7 für elektronische Optik, parametrische Verstärkung und/oder Frequenzmischung.

Fig. 1

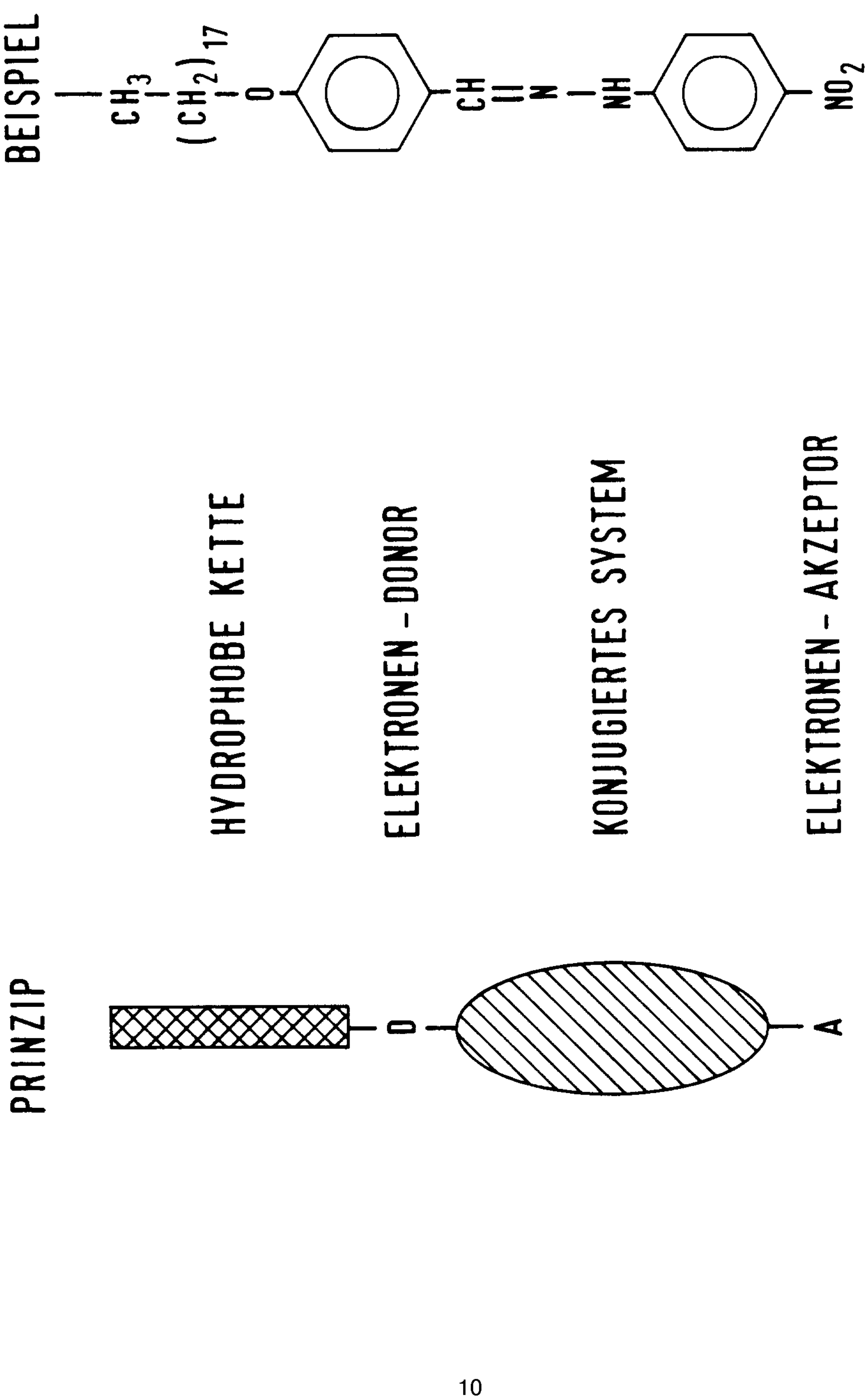
PRINZIP
BEISPIEL
HYDROPHOBE KETTE
ELEKTRONEN - DONOR
KONJUGIERTES SYSTEM
ELEKTRONEN - AKZEPTOR
D
A

Fig. 2

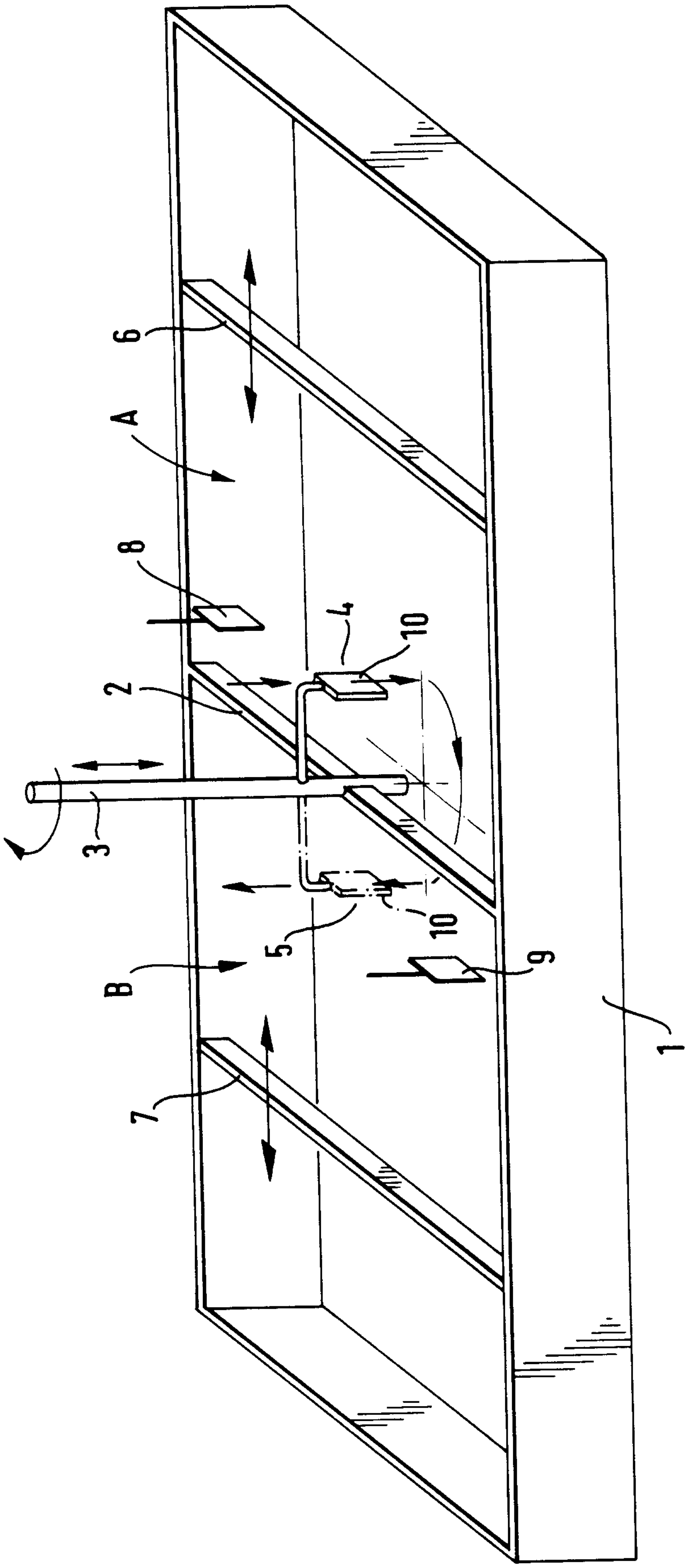

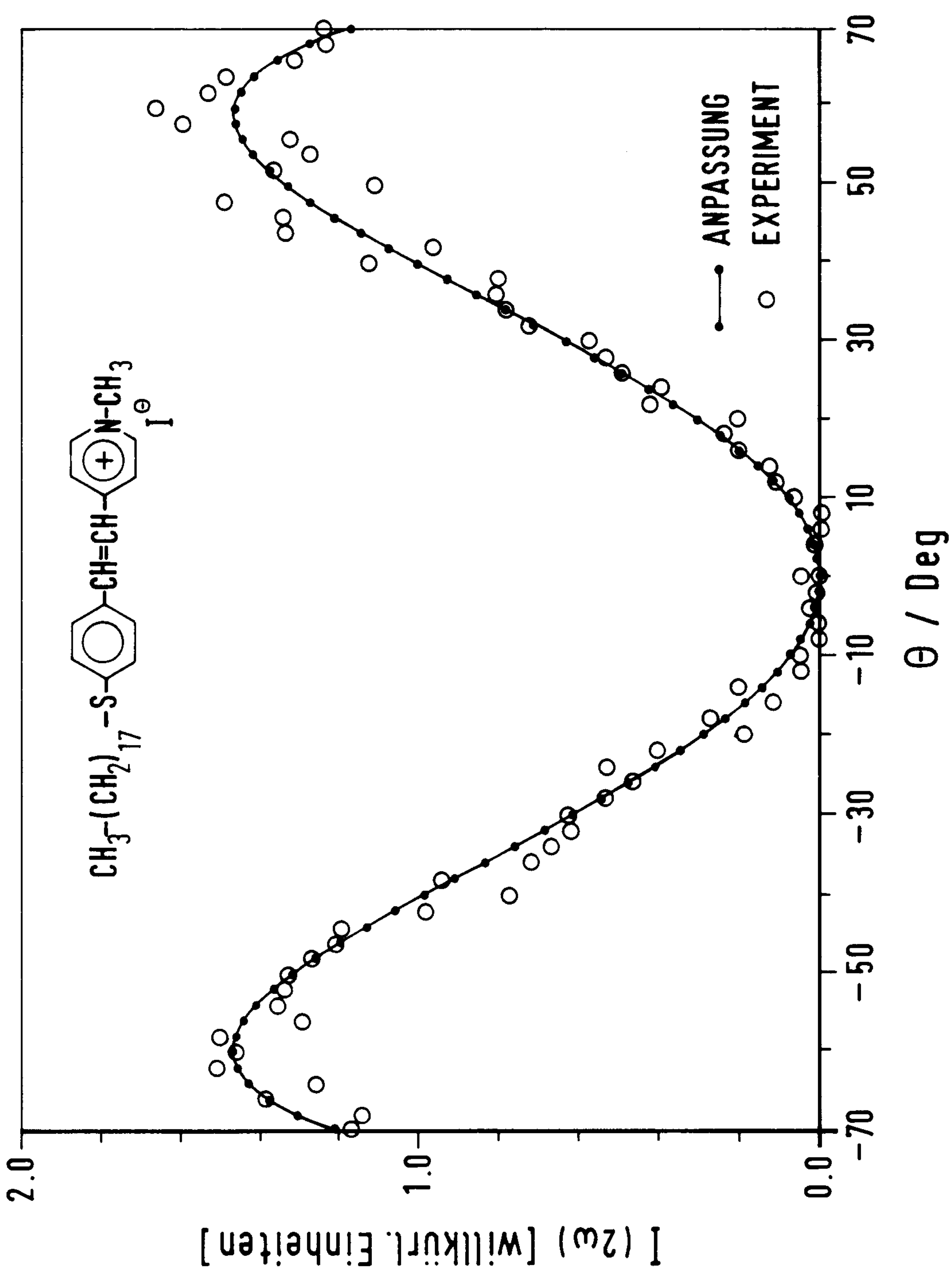
ANPASSUNG
EXPERIMENT
Θ / Deg
I (2ω) [willkürl. Einheiten]
2.0
1.0
0.0
-70
-50
-30
-10
10
30
50
70

Fig. 3

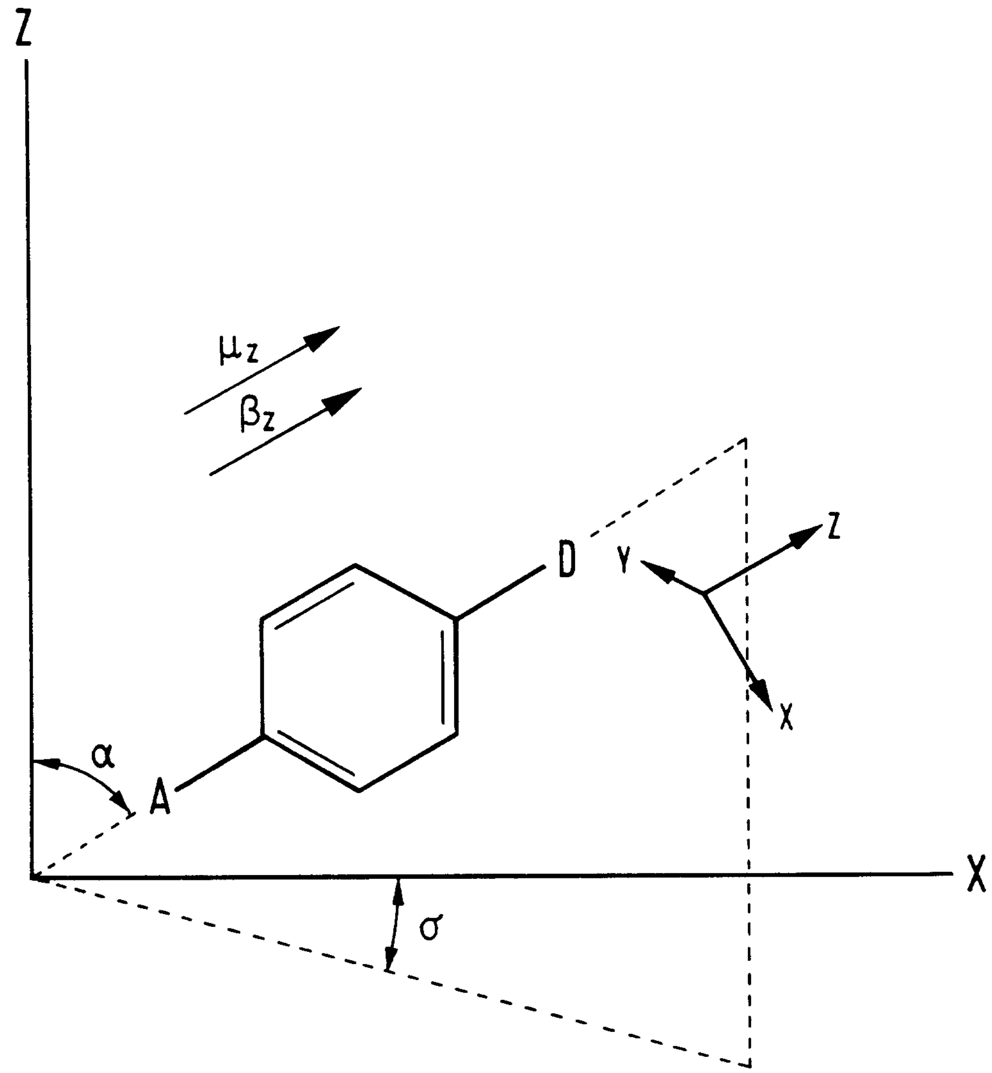


Fig. 4

Fig. 5

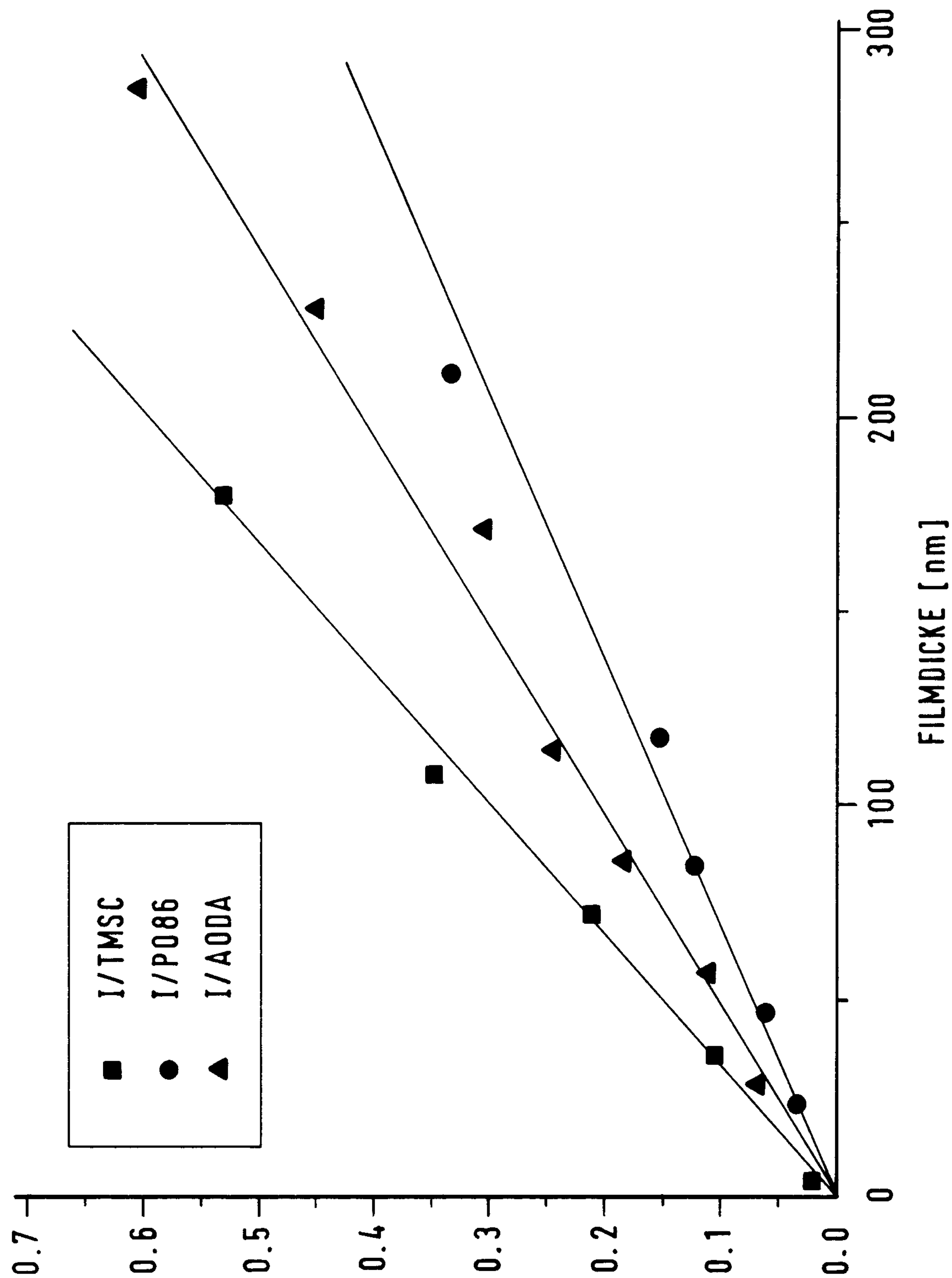
I/TMSC
I/P086
I/AODA
I(2ω)^1/2 [REL.EINHEITEN]
0.0
0.1
0.2
0.3
0.4
0.5
0.6
0.7
0
100
200
300
FILMDICKE [nm]

Fig. 6

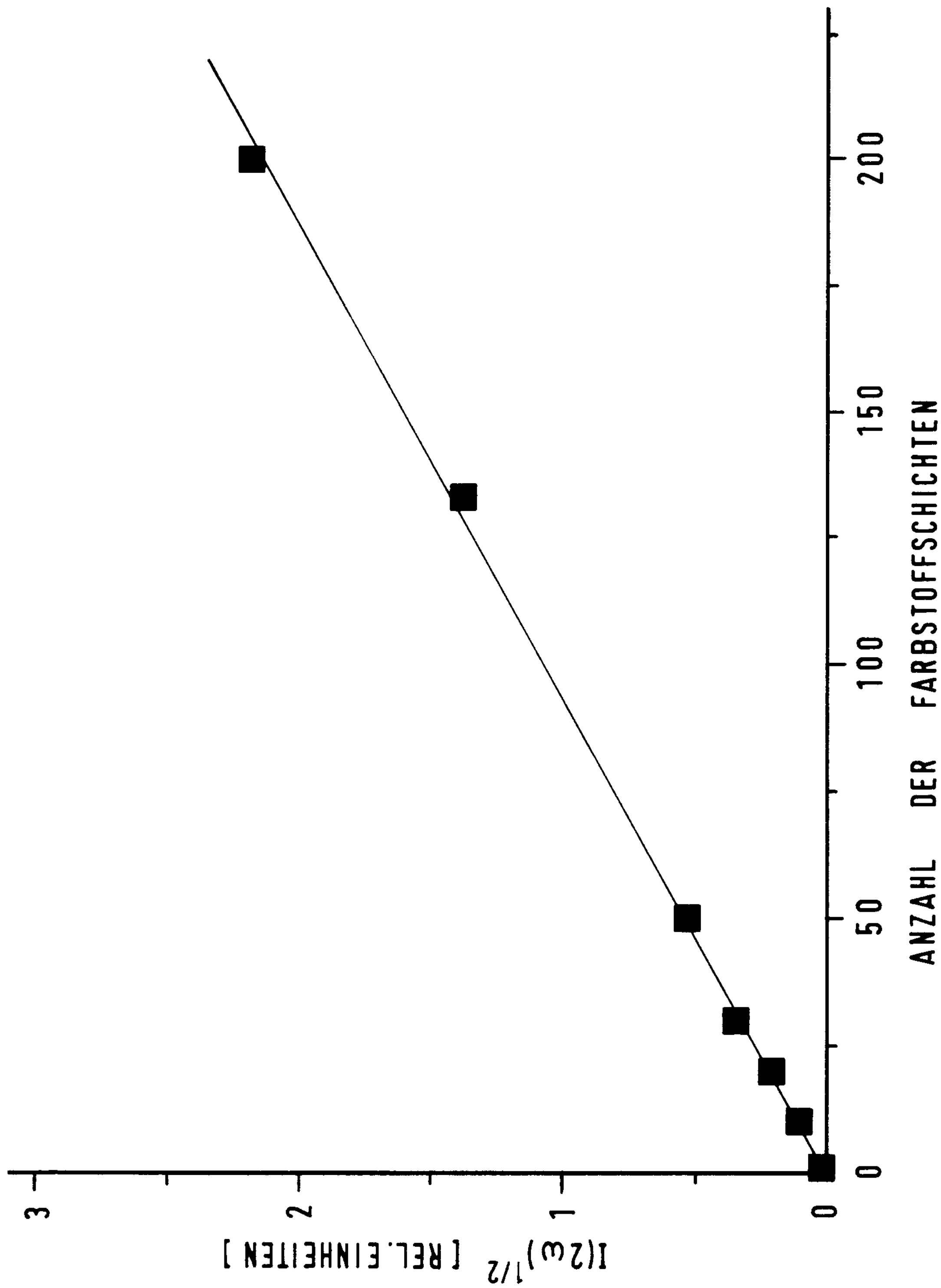
0
50
100
150
200
ANZAHL DER FARBSTOFFSCHICHTEN
0
1
2
3
I(2ω)1/2 [REL.EINHEITEN]

Fig. 1

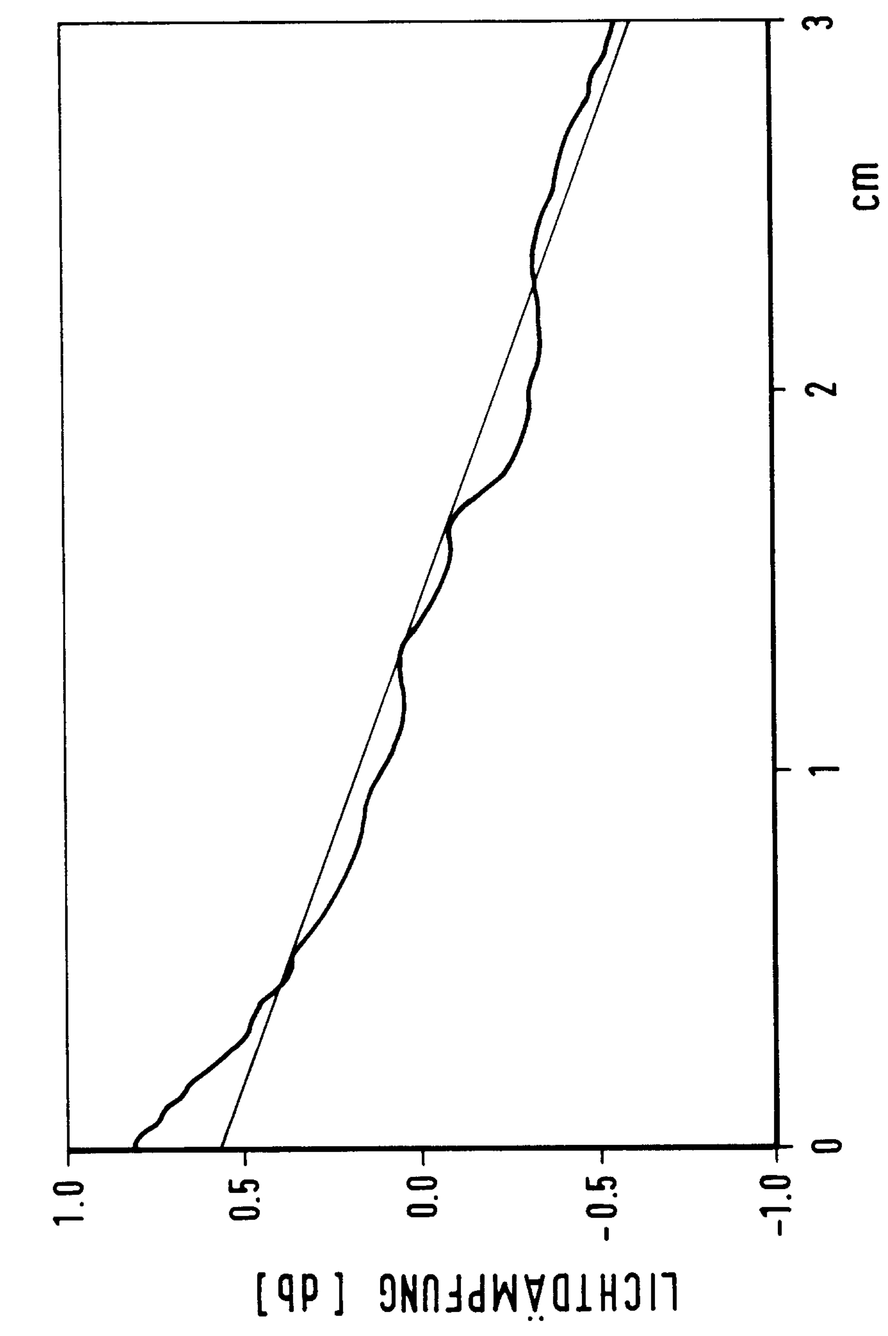

Fig. 8

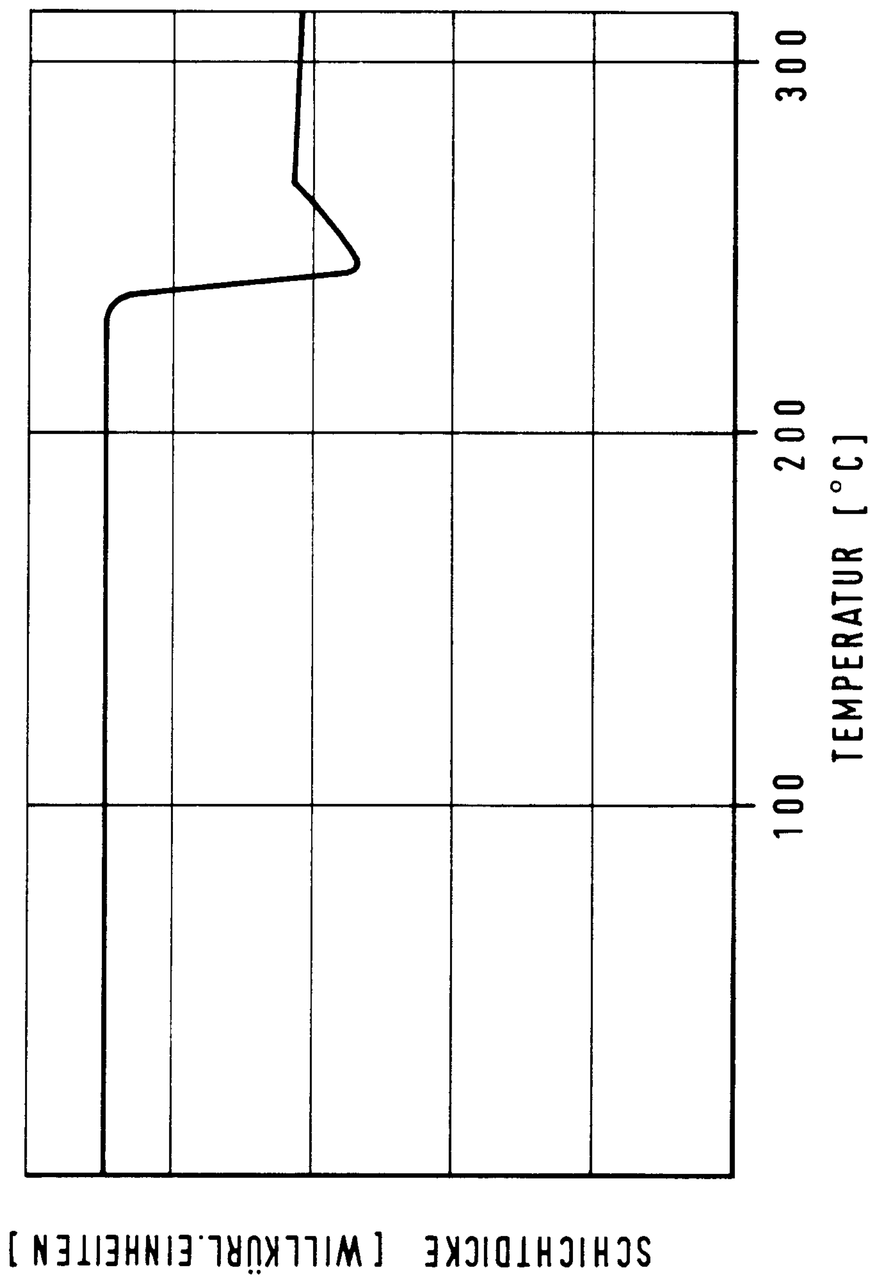

Europäisches Patentamt

# EUROPÄISCHER RECHERCHENBERICHT

Nummer der Anmeldung
EP 93 11 2405

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
|---|---|---|---|
| Y | WO-A-92 10781 (E.I.DU PONT DE NEMOURS)<br>* Seite 4, Zeile 20 - Seite 5, Zeile 8 *<br>* Seite 8, Zeile 12 - Zeile 30 *<br>* Seite 9, Zeile 8 - Zeile 22 *<br>* Seite 11, Zeile 15 - Zeile 32 *<br>* Seite 18, Zeile 17 - Zeile 24; Ansprüche 1-5,10 *<br>--- | 1,4-9 | G02F1/35<br>B05D1/20 |
| Y | EP-A-0 301 411 (HOECHST)<br>* Seite 2, Zeile 1 - Zeile 2 *<br>* Seite 2, Zeile 31 - Seite 3, Zeile 15 *<br>* Seite 6, Zeile 6 - Zeile 18 *<br>--- | 1,4,6-9 | |
| Y | GB-A-2 201 155 (THE PLESSEY COMPANY)<br>* Seite 4, Zeile 12 - Zeile 19; Abbildungen 1-6 *<br>* Seite 7, Zeile 15 - Seite 8, Zeile 19 *<br>--- | 1,5,6 | |
| Y | DATABASE WPI<br>Derwent Publications Ltd., London, GB;<br>AN 89-187853<br>& JP-A-1 125 219 (TOSHIBA) 17. Mai 1989<br>* Zusammenfassung *<br>--- | 1 | RECHERCHIERTE SACHGEBIETE (Int.Cl.5)<br>G02F<br>B05D |
| A | THIN SOLID FILMS<br>Bd. 133, Nr. 1-4 , November 1985 , LAUSANNE CH<br>Seiten 29 - 37<br>T.KAWAGUSHI 'monomolecular and multimolecular films of cellulose esters with various alkyl chains'<br>----- | 1-3 | |

Der vorliegende Recherchenbericht wurde für alle Patentansprüche erstellt

| Recherchenort | Abschlußdatum der Recherche | Prüfer |
|---|---|---|
| DEN HAAG | 10. November 1993 | BOULON, A |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument